(19) 

Europäisches
Patentamt
European
Patent Office
Office européen
des brevets

(11) **EP 1 868 117 A1**

(12) **EUROPEAN PATENT APPLICATION**
published in accordance with Art. 158(3) EPC

(43) Date of publication:
**19.12.2007 Bulletin 2007/51**

(21) Application number: **06730433.7**

(22) Date of filing: **29.03.2006**

(51) Int Cl.:
***G06F 17/30*** *(2006.01)*

(86) International application number:
**PCT/JP2006/306485**

(87) International publication number:
**WO 2006/106740 (12.10.2006 Gazette 2006/41)**

(84) Designated Contracting States:
**DE FR GB**

(30) Priority: **31.03.2005 JP 2005101964**

(71) Applicant: **Sony Corporation
Minato-ku
Tokyo (JP)**

(72) Inventor: **TATENO, Kei
Shinagawa-ku, Tokyo;1410001 (JP)**

(74) Representative: **Mills, Julia
D Young & Co
120 Holborn
London EC1N 2DY (GB)**

(54) **INFORMATION PROCESSING DEVICE AND METHOD, AND PROGRAM RECORDING MEDIUM**

(57) The present invention relates to an information processing apparatus and method, and a program storage medium which enable clustering to be performed such that the number of clusters and a representative of a cluster are determined so as to conform to a human cognition model. The notion of "typical examples" and "peripheral examples" in prototype semantics (FIG. 2A) can be developed as follows: such directivity in cognition of two items can be represented by an asymmetric distance measure in which a distance from a "typical example" to a "peripheral example" is longer than a distance from the "peripheral example" to the "typical example" as shown in FIG. 2B. Clustering in which the number of clusters and the representative of the cluster are determined so as to conform to the human cognition model is achieved by associating an asymmetric mathematical distance between two items with a relation between the two items to link the two items together by a "typical example" versus "peripheral example" relationship.

# FIG.2

**Description**

[Technical Field]

The present invention relates to an information processing apparatus and method, and a program storage medium, and, in particular, to an information processing apparatus and method, and a program storage medium which enable appropriate clustering.

[Background Art]

A clustering technique plays a very important role in fields such as machine learning and data mining. In image recognition, vector quantization in compression, automatic generation of a word thesaurus in natural language processing, and the like, for example, ability of clustering directly affects their precision.

Current clustering techniques are broadly classified into a hierarchical type and a partitional type.

In the case where distances can be defined between items, hierarchical clustering begins with each item as a separate cluster and merges the clusters into successively larger clusters.

Partitional clustering (see Non-Patent Documents 1 and 2) determines to what degree items arranged on a space in which the distances and absolute positions are defined belong to previously determined cluster centers, and calculates the cluster centers repeatedly based thereon.

[Non-Patent Document 1] MacQueen, J., "Some Methods for Classification and Analysis of Multivariate Observations," Proc. of the 5th Berkeley Symposium on Mathematical Statistics and Probability, pp.281-297, 1967.
[Non-Patent Document 2] Zhang, B. et al., "K-Harmonic Means - a Data Clustering Algorithm," Hewlett-Packard Labs Technical Report HPL-1999-124, 1999.

[Disclosure of Invention]

[Problems to be Solved by Invention]

In the hierarchical clustering, however, various modes of clusters are created depending on the definition of the distance between the clusters (e.g., distances defined in a nearest neighbor method, a furthest neighbor method, and a group average method), and a criterion for selection thereof is not definite.

Moreover, merging is normally repeated until the number of clusters is reduced to one, but in the case where there is a desire to stop the merging at the time when a predetermined number of clusters have been created, the merging is normally stopped based on a threshold distance or the number of clusters previously determined on an ad hoc basis. The MDL principle or AIC is sometimes employed, but no report has been made that they are practically useful.

In the partitional clustering as well, the number of clusters need to be determined in advance.

Moreover, in each of the hierarchical clustering and the partitional clustering, there is no standard available for picking out a representative item from each cluster created. In the partitional clustering, for example, an item that is closest to a center of a final cluster is normally selected as a representative of that cluster, but it is not clear what this means in human cognition.

The present invention has been made in view of the above situation, and achieves clustering such that the number of clusters and the representative of the cluster are determined so as to conform to a human cognition model.

[Means for Solving the Problems]

An information processing apparatus according to the present invention includes: first selection means for sequentially selecting, as a focused item, items that are to be clustered; second selection means for selecting, as a target item, an item that is close to the focused item out of the items that are to be clustered; calculation means for calculating a distance from the focused item to the target item and a distance from the target item to the focused item, using an asymmetric distance measure based on generality of the focused item and the target item; and linking means for linking the focused item and the target item together based on the distances calculated by the calculation means.

Based on the distances calculated by the calculation means, the linking means may link the focused item and the target item together by a parent-child relationship with one of the focused item and the target item as a parent and the other as a child.

The second selection means may select one item that is closest to the focused item as the target item.

The second selection means may select a predetermined number of items that are close to the focused item as the target items.

The linking means may link the focused item and the target item together by a parent-child relationship while permitting the focused item to have a plurality of parents.

A root node of a cluster obtained as a result of the linking performed by the linking means with respect to all the items that are to be clustered may be determined to be a representative item of the cluster.

An information processing method according to the present invention includes: a first selection step of sequentially selecting, as a focused item, items that are to be clustered; a second selection step of selecting, as a target item, an item that is close to the focused item out of the items that are to be clustered; a calculation step of calculating a distance from the focused item to the target item and a distance from the target item to the focused item, using an asymmetric distance measure based on generality of the focused item and the target item; and a linking step of linking the focused item and the target item together based on the distances calculated in the calculation step.

A program storage medium according to the present invention includes: a first selection step of sequentially selecting, as a focused item, items that are to be clustered; a second selection step of selecting, as a target item, an item that is close to the focused item out of the items that are to be clustered; a calculation step of calculating a distance from the focused item to the target item and a distance from the target item to the focused item, using an asymmetric distance measure based on generality of the focused item and the target item; and a linking step of linking the focused item and the target item together based on the distances calculated in the calculation step.

In an information processing apparatus and method, and a program according to the present invention, items that are to be clustered are sequentially selecting as a focused item; out of the items that are to be clustered, an item that is close to the focused item is selected as a target item; a distance from the focused item to the target item and a distance from the target item to the focused item are calculated using an asymmetric distance measure based on generality of the focused item and the target item; and the focused item and the target item are linked together based on the distances calculated.

[Effect of Invention]

According to the present invention, it is possible to achieve clustering such that the number of clusters and a representative of a cluster are determined so as to conform to a human cognition model.

[Brief Description of Drawings]

[FIG. 1] FIG. 1 is a block diagram illustrating an exemplary structure of an information processing apparatus 1 according to the present invention.

[FIG. 2] FIG. 2 is a diagram illustrating a principle of a clustering process according to the present invention.

[FIG. 3] FIG. 3 is a diagram showing examples of word models.

[FIG. 4] FIG. 4 is a flowchart illustrating the clustering process according to the present invention.

[FIG. 5] FIG. 5 is a diagram showing examples of KL divergences between words.

[FIG. 6] FIG. 6 is a diagram illustrating a parent-child relationship.

[FIG. 7] FIG. 7 is a diagram illustrating another parent-child relationship.

[FIG. 8] FIG. 8 is a diagram illustrating a clustering result.

[FIG. 9] FIG. 9 is a diagram illustrating an exemplary structure of a personal computer.

[Description of the Reference Numerals]

21 document storage section, 22 morphological analysis section, 23 word model generation section, 24 word model storage section, 25 clustering section, 26 cluster result storage section, 27 processing section

[Best Mode for Carrying out the Invention]

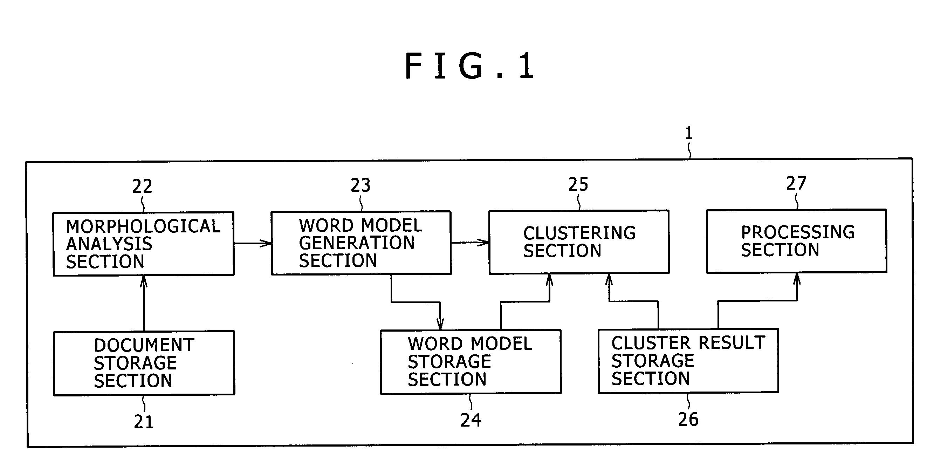

FIG. 1 shows an exemplary structure of an information processing apparatus 1 according to the present invention. This information processing apparatus 1 clusters given items such that the number of clusters and a representative of a cluster are determined so as to conform to a human cognition model.

First, a principle of clustering according to the present invention will now be described below. The clustering according to the present invention is performed using a cognition model based on prototype semantics in cognitive psychology.

The prototype semantics tells that there are "typical examples" and "peripheral examples" in human cognition of concepts in a category (e.g., words in a category).

Take "sparrow", "ostrich", and "penguin" in a category, birds, for example, and pose the following two questions:

3

Question 1: Is "sparrow" similar to "ostrich"?; and
Question 2: Is "ostrich" similar to "sparrow"?

in which objects regarding which similarity is questioned are replaced with each other.

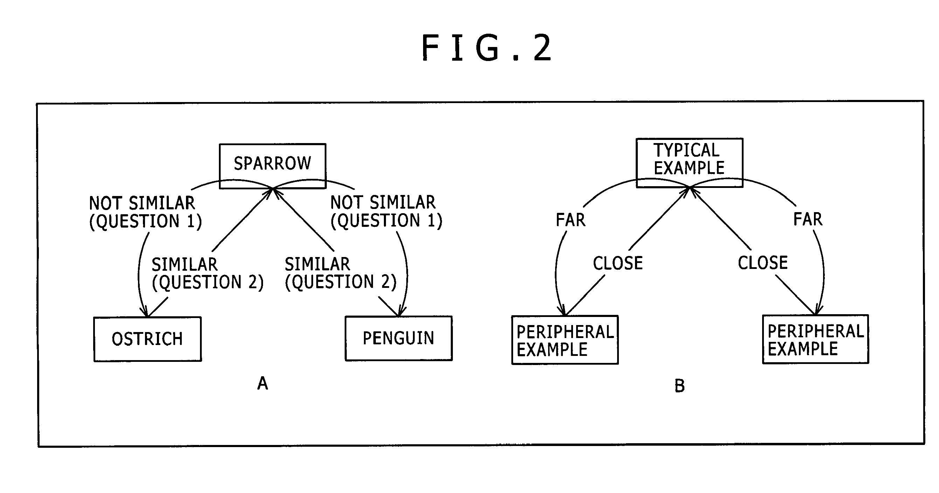

Then, as shown in FIG. 2A, a result "not similar" is obtained for Question 1, whereas a result "similar" is obtained for Question 2. Regarding "sparrow" and "penguin", similar results are obtained: a result "not similar" for Question 1 (Is "sparrow" similar to "penguin"?) and a result "similar" for Question 2 (Is "penguin" similar to "sparrow"?).

In short, "sparrow" is a "typical example" in the birds, while "ostrich" and "penguin" are "peripheral examples".

Here, the notion of "typical examples" and "peripheral examples" in the prototype semantics can be developed as follows: such directivity (i.e., a property of an answer becoming different by replacing the objects regarding which similarity is questioned with each other) in cognition of two items can be represented by an asymmetric distance measure in which a distance from the "typical example" to the "peripheral example" (i.e., a degree to which the "typical example" is similar to the "peripheral example") is longer (smaller) than a distance from the "peripheral example" to the "typical example" (i.e., a degree to which the "peripheral example" is similar to the "typical example") as shown in FIG. 2B.

As an asymmetric distance measure that corresponds to such directivity between the items, there is Kullback-Leibler divergence (hereinafter referred to as the "KL divergence").

In the KL divergence, in the case where items $a_i$ and $a_j$ are expressed by probability distributions $p_i(x)$ and $p_j(x)$, distance $D(a_i \| a_j)$ is a scalar quantity as defined in equation (1), and a distance from an "even probability distribution" to an "uneven probability distribution" tends to be longer than a distance from the "uneven probability distribution" to the "even probability distribution". A probability distribution of a general item is "even", while a probability distribution of a special item is "uneven".

[Equation 1]

$$D(a_i \| a_j) = KL(p_i \| p_j)$$

$$= \int_{-\infty}^{\infty} p_i(x) \log \frac{p_i(x)}{p_j(x)} dx \quad \text{(when x is a continuous variable)}$$

$$= \sum_x p_i(x) \log \frac{p_i(x)}{p_j(x)} \quad \text{(when x is a discrete variable)}$$

$$\dots \quad (1)$$

For example, in the case where a random variable $z_k$ (k = 0, 1, 2) is defined for items $a_i$ and $a_j$, and when probability distribution $p(z_k|a_i) = (0.3, 0.3, 0.4)$, probability distribution $p(z_k|a_j) = (0.1, 0.2, 0.7)$, and probability distribution $p(z_k|a_i)$ is evener than probability distribution $p(z_k|a_j)$ (i.e., when, comparing item $a_i$ with item $a_j$, item $a_i$ is a general item (typical example) and item $a_j$ is a special item (peripheral example)), a result $KL(p_i \| p_j) = 0.0987 > KL(p_j \| p_i) = 0.0872$ is obtained.

As described above, the KL divergence, in which the distance D (general item‖peripheral item) from a "more general item (typical example)" to a "less general item (peripheral example)" is greater than the opposite distance D (peripheral item‖general item), corresponds to an asymmetric directional relationship between the "typical example" and the "peripheral example" in the cognition model in the prototype semantics.

That is, the present invention achieves clustering such that the number of clusters and the representative of the cluster are determined so as to conform to the human cognition model by associating an asymmetric mathematical distance (e.g., the KL divergence) between two items with the relation between the two items to link the two items together by a "typical example" versus "peripheral example" relationship.

In the KL divergence, $KL(p \| q) \geq 0$ is satisfied for arbitrary distributions p and q, but in general, $KL(p \| q) \neq KL(q \| p)$, and the triangle inequality, which holds for the general distance, does not hold; therefore, the KL divergence is not a distance in a strict sense.

This KL divergence can be used to define the degree of similarity between items that have directivity. Anything that monotonously decreases relative to the distance can be used, such as $\exp(-KL(p_i \| P_j))$ or $KL(P_i \| P_j)^{-1}$, for example.

A condition for the distance to be associated with the two items is to have asymmetricity that corresponds to the cognition model in the prototype semantics, i.e., that the distance from the "more general item (typical example)" to the "less general item (peripheral example)" is greater than the opposite distance. Besides the KL divergence, other information theoretical scalar quantities, a modified Euclidean distance (equation (2)) that has directivity with a vector size in a vector space as a weight, or the like can be used as long as they satisfy the above condition.

[Equation 2]

$$D(a_i \| a_j) = |a_i| |a_i - a_j| \qquad \cdots (2)$$

Returning to FIG. 1, the exemplary structure of the information processing apparatus 1 will now be described below.

It is assumed here that clustering of words is performed. In the case where the random variable $Z_k$ (k = 0, 1, ... , M-1) is the probability of occurrence of co-occurring words or a latent variable in PLSA (Probabilistic Latent Semantic Analysis), for example, the probability distribution of a special word (a peripheral example) tends to be "highly uneven" while the probability distribution of a general word (i.e., a typical example) tends to be "even"; therefore, it is possible to link two compared words together with one of the two words as a "typical example" (in this example, a parent) and the other as a "peripheral example" (a child) in accordance with the mathematical distance (e.g., the KL divergence) between the two words.

In the case of distance D defined by the KL divergence for words $w_i$ and $w_j$, for example, if $D(W_i \| W_j)$ (= KL $(p_i \| p_j)$) > $D(W_j \| W_i)$ (= KL$(p_j \| p_i)$), then word $w_i$ is a "typical example" and word $w_j$ is a "peripheral example"; therefore, the two words are linked together with word $w_i$ as a parent and word $w_j$ as a child.

In a document storage section 21, a writing (text data) as source data that includes items (in this example, words) to be clustered is stored.

A morphological analysis section 22 analyzes the text data (a document) stored in the document storage section 21 into words (e.g., "warm", "gentle", "warmth", "wild", "harsh", "gutsy", "rough", etc.), and supplies them to a word model generation section 23.

The word model generation section 23 converts each of the words supplied from the morphological analysis section 22 into a mathematical model to observe relations (distances) between the words, and stores resulting word models in a word model storage section 24.

As the word models, there are probabilistic models such as PLSA and SAM (Semantic Aggregate Model). In these, a latent variable exists behind co-occurrence of a writing and a word or co-occurrence of words, and expressions of individuals are determined based on their stochastic occurrence.

PLSA is introduced in Hofmann, T., "Probabilistic Latent Semantic Analysis", Proc. of Uncertainty in Artificial Intelligence, 1999, and SAM is introduced in Daichi Mochihashi and Yuji Matsumoto, "Imi no Kakuritsuteki Hyogen (Probabilistic Representation of Meanings)", Joho Shori Gakkai Kenkyu Hokoku 2002-NL-147, pp.77-84, 2002.

In the case of SAM, for example, the probability of the co-occurrence of word $w_i$ and word $w_j$ is expressed by equation (3) using a latent random variable c (a variable that can take k predetermined values, $c_0$, $c_1$, ... , $c_{k-1}$), and as shown in equations (3) and (4), probability distribution P(c|w) for word w can be defined and this becomes the word model. In equation (3), the random variable c is a latent variable, and probability distribution P(w|c) and probability distribution P(c) are obtained by an EM algorithm.

[Equation 3]

$$P(w_i, w_j) = \sum_c P(c)P(w_i|c)P(w_j|c) \qquad \cdots (3)$$

[Equation 4]

$$P(c|w) \propto P(w|c)P(c) \qquad \cdots (4)$$

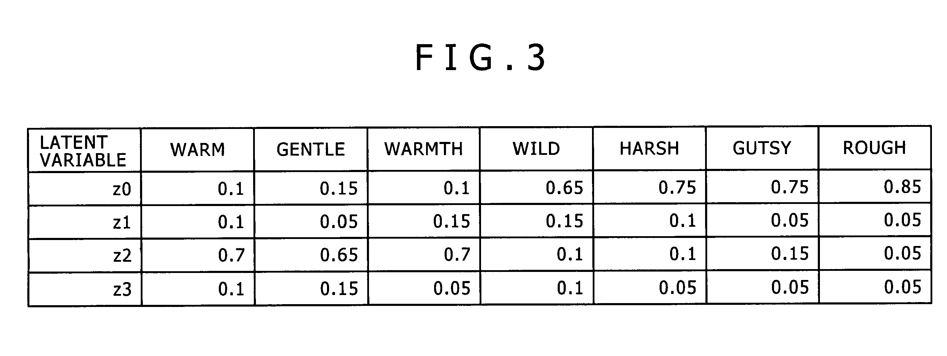

FIG. 3 shows examples of the word models (i.e., the probability distribution of the latent variable using PLSA or the like) of the words "warm", "gentle", "warmth", "wild", "harsh", "gutsy", and "rough" in the case where k = 4.

As the word model, besides the probabilistic models such as PLSA and SAM, a document vector, a co-occurrence vector, a meaning vector which has been dimension-reduced by LSA (Latent Semantic Analysis) or the like, and so on are available, and any of them may be adopted arbitrarily. Note that PLSA and SAM express the words in such a latent random variable space; therefore, it is supposed that, with PLSA or SAM, semantic tendencies · are more easily graspable than when using a normal co-occurrence vector or the like.

Returning to FIG. 1, a clustering section 25 clusters the words based on the above-described principle, and stores a clustering result in a clustering result storage section 26.

A processing section 27 performs a specified process using the clustering result stored in the clustering result storage section 26 (which will be described later).

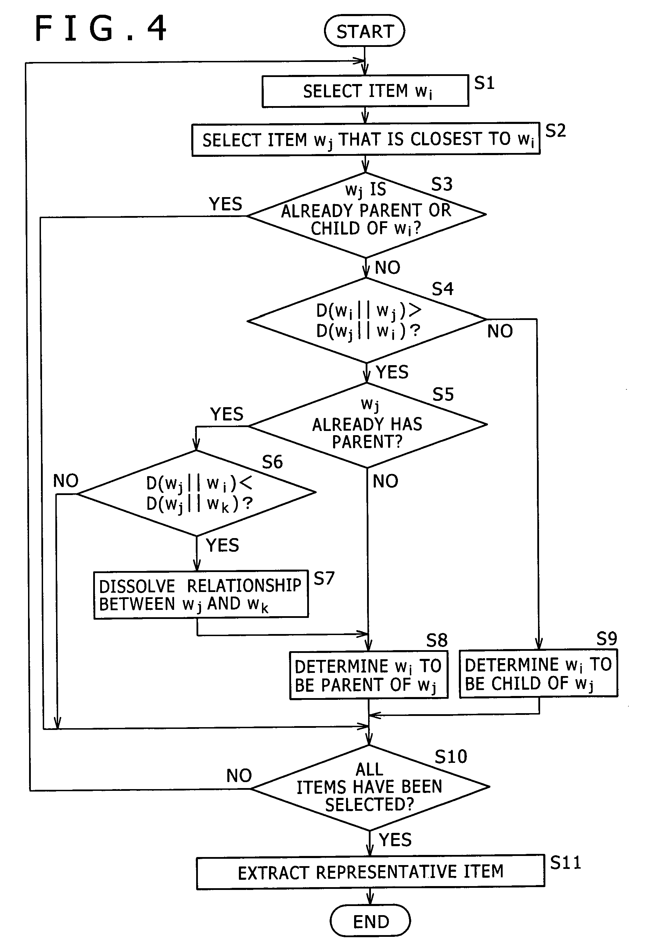

Next, a clustering process according to the present invention will now be described below. An outline thereof will first be described with reference to a flowchart of FIG. 4, and thereafter, it will be described again based on a specific example.

At step S1, focusing on one of the words whose word models are stored in the word model storage section 24, the clustering section 25 selects the word model of that word $w_i$.

At step S2, using the word models stored in the word model storage section 24, the clustering section 25 selects a word that is closest to (e.g., most likely to co-occur with, or most similar in meaning to) word $w_i$ as word $w_j$ (a target word), which is to be linked with word $w_i$ in the following processes.

Specifically, for example, the clustering section 25 selects, as word $w_j$, a word for which the distance (e.g., the KL divergence) from word $w_i$ to word $w_j$ takes a minimum value as shown in equation (5) or a word for which the sum of the distance from word $w_i$ to word $w_j$ and the distance from word $w_j$ to word $w_i$ takes a minimum value as shown in equation (6).

[Equation 5]

$$\arg\min_{w_j} D(w_i \| w_j) \qquad \cdots (5)$$

[Equation 6]

$$\arg\min_{w_j}(D(w_i \| w_j) + D(w_j \| w_i)) \qquad \cdots (6)$$

At step S3, the clustering section 25 determines whether or not word $w_j$ is the parent or child of word $w_i$.

Since in step S8 or step S9 described later, a word that is the "typical example" is determined to be a parent and a word that is the "peripheral example" is determined to be a child based on the directional relationship between the two words, it is determined here whether or not word $w_j$ has already been determined to be the parent or child of word $w_i$ in any previous process.

If it is determined at step S3 that word $w_j$ is neither the parent nor the child of word $w_i$, control proceeds to step S4.

At step S4, the clustering section 25 obtains distance $D(w_i \| w_j)$ (=KL($p_i \| p_j$)) and distance $D(w_j \| w_i)$ (= KL($p_j \| p_i$)) between the two words, and determines whether distance $D(w_i \| w_j)$ > distance $D(w_j \| w_i)$.

If it is determined at step S4 that distance $D(w_i \| w_j)$ > distance $D(w_j \| w_i)$, i.e., if word $w_i$ is the "typical example"

and word $w_j$ is the "peripheral example" when comparing word $w_i$ and word $w_j$ with each other (FIG. 2), control proceeds to step S5.

At step S5, the clustering section 25 determines whether word $w_j$ (in the present case, a word that may become the child) has a parent (i.e., whether word $w_j$ is a child of another word $w_k$), and if it is determined that word $w_j$ has a parent, control proceeds to step S6.

At step S6, the clustering section 25 obtains distance $D(w_j\|w_i)$ from word $w_j$ to word $w_i$ and distance $D(w_j\|w_k)$ from word $w_j$ to word $w_k$, and determines whether distance $D(w_j\|w_i) <$ distance $D(w_j\|w_k)$, and if it is determined that this inequality is satisfied (i.e., if the distance to word $w_i$ is shorter than the distance to word $w_k$), control proceeds to step S7 and a parent-child relationship between word $w_j$ and word $w_k$ is dissolved.

If it is determined at step S5 that word $w_j$ does not have a parent, or if the parent-child relationship between word $w_j$ and word $w_k$ is dissolved at step S7, control proceeds to step S8, and the clustering section 25 determines word $w_i$ to be the parent of word $w_j$ and determines word $w_j$ to be the child of word $w_i$ to link word $w_i$ and word $w_j$ together.

If it is determined at step S4 that distance $D(w_i\|w_j) >$ distance $D(w_j\|w_i)$ is not satisfied, control proceeds to step S9, and the clustering section 25 determines word $w_i$ to be the child of word $w_j$ and determines word $w_j$ to be the parent of word $w_i$ to link word $w_i$ and word $w_j$ together.

If it is determined at step S3 that word $w_j$ is the parent or child of word $w_i$ (i.e., if word $w_i$ and word $w_j$ have already been linked together), if it is determined at step S6 that distance $D(w_j\|w_i) <$ distance $(w_j\|w_k)$ is not satisfied (i.e., if the distance to word $w_k$ is shorter than the distance to word $w_i$), or if word $w_i$ and word $w_j$ are linked together at step S8 or step S9, i.e., if word $w_i$ has been linked with word $w_j$ or word $w_k$, control proceeds to step S10.

At step S10, the clustering section 25 determines whether all the word models (i.e., the words) stored in the word model storage section 24 have been selected, and if it is determined that there is a word yet to be selected, control returns to step S1, and a next word is selected, and the processes of step S2 and the subsequent steps are performed in a similar manner.

If it is determined at step S10 that all the words have been selected, control proceeds to step S11, and a root-node item (word) of a cluster that is formed as a result of repeating the processes of steps S1 to S10 is extracted as a representative item (word) of that cluster and stored in the cluster result storage section 26 together with the cluster formed.

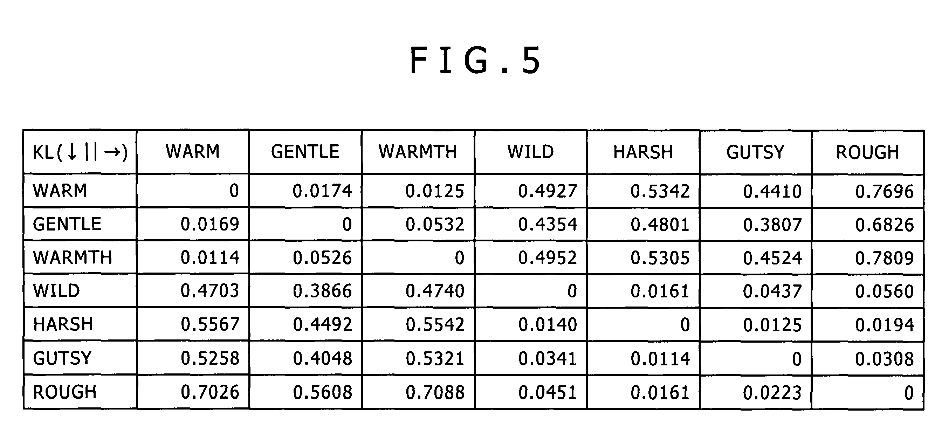

Next, the clustering process will now be described specifically with reference to the exemplary word models of "warm" and so on, as shown in FIG. 3, stored in the word model storage section 24. It is assumed that KL divergences between the words "warm", "gentle", "warmth", "wild", "harsh", "gutsy", and "rough" are those shown in FIG. 5. In FIG. 5, a numerical value shown in each cell is a KL divergence from a corresponding row element to a corresponding column element.

First, the word "warm" is selected as word $w_i$ (i.e., the word model thereof is selected) (step S1). It is assumed here that, at step S1, the word models of the words will be selected in the following order: "warm", "gentle", "warmth", "wild", "harsh", "gutsy", and "rough".

When "warm" $w_i$ has been selected, word $w_j$ that is closest to "warm" $w_i$ is selected (step S2). It is assumed here that a word having the shortest distance D (= KL(word $w_i\|$word $w_j$) (equation (5)) is selected as the closest word $w_j$.

The distances from "warm" $w_i$ to the other words shown in FIG. 5 show that distance D (= KL("warm"||"warmth")) to "warmth" has the smallest value, 0.0125; therefore, "warmth" is selected as word $w_j$.

In the present case, "warmth" $w_j$ is neither the parent nor the child of word "warm" $w_i$ (step S3); therefore, the parent-child relationship between the two words is determined next (step S4).

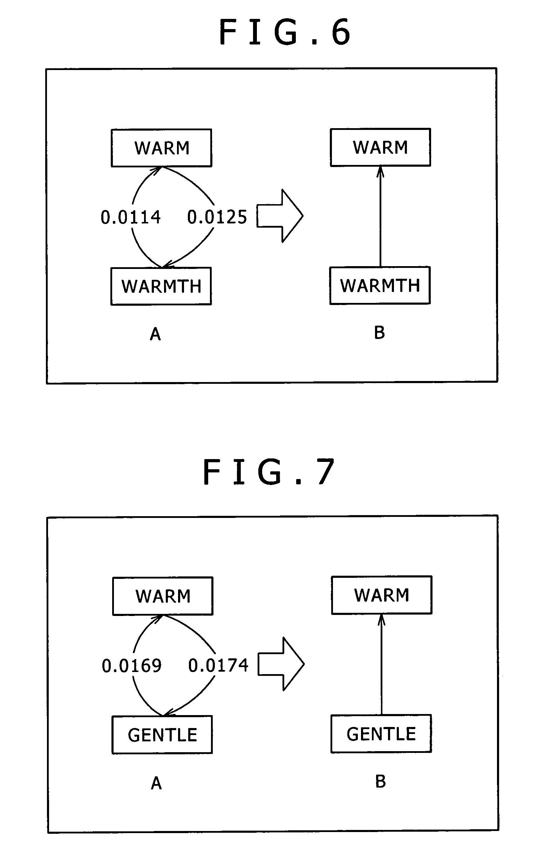

Distance D (= KL("warm" $w_i\|$"warmth" $w_j$)) is 0.0125, and distance D (= KL ("warmth" $w_j\|$"warm" $w_i$)) is 0.0114, and therefore distance D ("warm" $w_i\|$"warmth" $w_j$) > distance D ("warmth" $w_j\|$"warm" $w_i$) (FIG. 6A). Therefore, it is determined next whether "warmth" $w_j$ has a parent (step S5).

In the present case, "warmth" $w_j$ does not have a parent; therefore, "warm" $w_i$ is determined to be the parent of "warmth" $w_j$ and "warmth" $w_j$ is determined to be the child of "warm" $w_i$ to link "warm" and "warmth" together (FIG. 6B) (step S8). In FIG. 6, a base of an arrow indicates the "child" word while a tip of the arrow indicates the "parent" word. This applies to FIG. 7B as well.

Next, "gentle" (FIG. 3) is selected as word $w_i$ (step S1), and a word that is closest to "gentle" $w_i$ is selected as word $w_j$ (step S2).

The distances from "gentle" to the other words shown in FIG. 5 show that distance D (= KL("gentle"||"warm")) to "warm" has the smallest value, 0.0169; therefore, "warm" is selected as word $w_j$.

In the present case, "warm" $w_j$ is neither the parent nor the child of "gentle" $w_i$ (step S3) ; therefore, the parent-child relationship therebetween is determined next (step S4).

Distance D ("gentle" $w_i\|$"warm" $w_j$) is 0.0169, and distance D ("warm" $w_j\|$"gentle" $w_i$) is 0.0174, and therefore distance D ("gentle" $w_i\|$"warm" $w_j$) < distance D ("warm" $w_j\|$"gentle" $w_i$) (FIG. 7A). Therefore, "gentle" $w_i$ is determined to be a child of "warm" $w_j$ and "warm" $w_j$ is determined to be a parent of "gentle" $w_i$ to link "gentle" and "warm" together (FIG. 7B) (step S9).

Next, "warmth" (FIG. 3) is selected as word $w_i$ (step S1), and a word that is closest to "warmth" $w_i$ is selected

as word $w_j$.

The distances from "warmth" $w_i$ to the other words shown in FIG. 5 show that distance D to "warm" has the smallest value, 0.0114; therefore, "warm" is selected as word $w_j$.

In the present case, however, "warm" $w_j$ has already been determined to be the parent of "warmth" $w_i$ in the previous process (i.e., the parent-child relationship therebetween has already been established) (FIG. 6B); therefore, the parent-child relationship therebetween is maintained as it is, and the next word "wild" is selected as word $w_i$ (step S1).

Similar processes are performed with respect to "wild" as well as "harsh", "gutsy", and "rough" (FIG. 3), which will be selected subsequently.

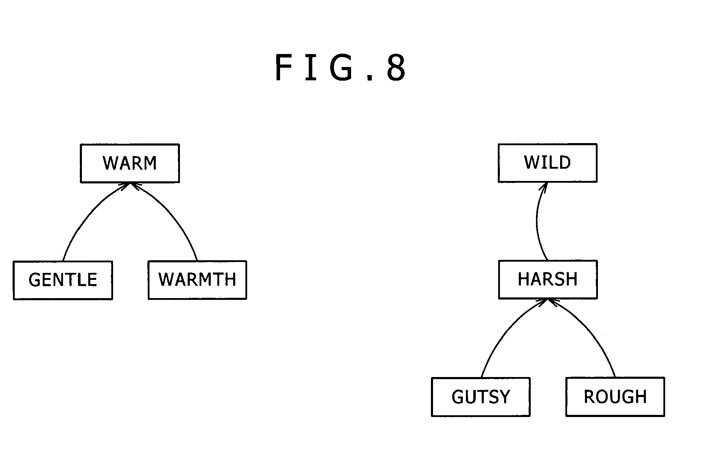

As a result of the clustering process performed with respect to "warm" through "rough" (FIG. 3) as described above, a cluster made up of "warm", "warmth", and "gentle" and a cluster made up of "wild", "harsh", "gutsy", and "rough" are formed as illustrated in FIG. 8. That is, the two clusters are formed out of these seven words, and representative words of the two clusters are "warm" and "wild", respectively.

Root-node words (i.e., "warm" and "wild") of the clusters do not permit a word (one or more words) in close vicinity thereto to become a child of any other words than themselves, and do not have a parent, and thus are, in a space around the root nodes, out of contact with any other word except in a child direction, resulting in automatic separation of the clusters.

Words having higher degrees of abstraction (generality) are more likely to become the parent. Therefore, by determining the root node as the representative of the cluster, it is possible to determine a word that has the highest degree of abstraction (generality) in the cluster to be the representative of the cluster.

In the above-described manner, the number of clusters and the representative of the cluster are determined so as to conform to the human cognition.

Note that although it has been assumed in the above that item $w_j$ to be linked to item $w_i$ by the parent-child relationship is only one item that is closest (step S2 in FIG. 4), top N items (N is less than the total number of items) may be selected as item $w_j$. By selecting a plurality of items as item $w_j$, and establishing the parent-child relationships between the plurality of items and item $w_i$, it is possible to expand a lower part of the cluster (in other words, it is possible to adjust the degree of expansion of the cluster by the number of items). Note that when too large a number is assigned to N, all the items may be contained in a single cluster in the end.

If, when checking relations of item $w_i$ in focus to a plurality of neighboring items $w_j$, item $w_i$ becoming a child of a plurality of items (i.e., item $w_i$ having a plurality of parents) is permitted (for example, if the processes of steps S5 to S7 in FIG. 4 are omitted), a single item may come to belong to a plurality of clusters at the same time. In this case, while preventing parent-child connection at nodes other than the root node from occurring between different clusters, an item that can be reached from the root by tracing in a child direction may be chosen as a member of a cluster that has that root node as its representative item (e.g., step S11 in FIG. 4). This achieves soft clustering in which a certain item belongs to a plurality of clusters. The degree of belonging can be defined as equal or by the degree of similarity to a word immediately above, or the degree of similarity to a root word, or the like.

Moreover, the following constraints may be imposed on the above-described clustering process.

In order to prevent utterly dissimilar items from establishing the parent-child relationship therebetween, the selection of item $w_j$ (step S2 in FIG. 4) may be performed such that an item that is far away by a predetermined threshold distance or more is not selected as item $w_j$.

Further, for an additional degree of similarity, a constraint that a prime component in the items should have an identical element may be added, for example.

For example, assuming that item $w_{ik}$ represents a kth element of item $w_i$ (e.g., a kth element of a word vector, or $p(z_k|w_i)$), coincidence therein (equation (7)) may be used as a condition for the selection of item $w_j$.

[Equation 7]

$$\arg\max_{k} w_{ik} = \arg\max_{k} w_{jk} \qquad \cdots (7)$$

Further, in order to ensure the parent-child relationship, in the case where each item is expressed by the probability distribution, for example, a constraint that, with an entropy (equation (8)) used as an indicator of generality, an item having the greater entropy should necessarily be determined to be the parent may be added, for example (step S8 and step S9 in FIG. 4).

[Equation 8]

$$\left(-\sum_{x} p(x) \log(p(x))\right) \qquad \cdots (8)$$

In the case where $p(z_k|w_i) = (0.3, 0.3, 0.4)$ and $p(z_k|w_j) = (0.1, 0.2, 0.7)$, for example, entropies thereof are 0.473 and 0.348, respectively, and item $w_i$ having a general distribution has the greater entropy. In this case, when these two words can establish the parent-child relationship therebetween (i.e., when the closest word of either of the two is the other), item $w_i$ is necessarily determined to be the parent.

Further, in the case where each item is expressed by a vector, and in the case of words, for example, the total frequency of occurrence, the reciprocal of a $X^2$ value for the document, or the like may be used as a measure of generality.

The $X^2$ value is introduced in Nagao et al., "Nihongo Bunken ni okeru Juyogo no Jidou Chushutsu (An Automatic Method of the Extraction of Important Words from Japanese Scientific Documents)", Joho Shori, Vol.17, No.2, 1976.

Next, specific examples of processing performed by the processing section 27 in FIG. 1 based on the clustering result obtained in the above-described manner will now be described below.

In the case where a review of a music CD is stored in the document storage section 21, words that form the review are clustered, and its result is stored in the clustering result storage section 26, for example, the processing section 27 uses the clusters stored in the clustering result storage section 26 to perform a process of searching a CD that corresponds to a keyword entered by a user.

Specifically, the processing section 27 detects a cluster to which the entered keyword belongs, and searches a CD whose review includes, as a characteristic word of the review (i.e., a word that concisely indicates a content of the CD), a word that belongs to the cluster. Note that the word that concisely indicates the content of the CD in the review has been determined in advance.

The variety of review writers or subtle inconsistency in written forms or expressions may cause words that concisely indicate contents even of CDs having similar contents to differ. However, use of the clustering result in accordance with the present invention, in which the words that concisely indicate contents of music CDs having similar contents are supposed to normally belong to the same cluster, enables appropriate search of a music CD that has a similar content.

Note that when introducing the searched CD, a representative word of the cluster to which the keyword belongs may also be presented to the user.

In the case where metadata of a content (a document related to the content) is stored in the document storage section 21, words that form the metadata are clustered, and its result is stored in the clustering result storage section 26, the processing section 27 performs a process of matching user taste information with the metadata and recommending a content that the user is supposed to like based on a result of matching.

Specifically, at the time of matching, the processing section 27 treats words that have similar meanings (i.e., words that belong to the same cluster) as a single type of metadata for matching.

When words that occur in the metadata are used as they are, they may be too sparse for successful matching between items. However, when the words having similar meanings are treated as a single type of metadata, such sparseness is overcome. Moreover, in the case where metadata that has greatly contributed to the matching between the items is presented to the user, presentation of a representative (highly general) word (i.e., the representative word of the cluster) will allow the user to intuitively grasp the item.

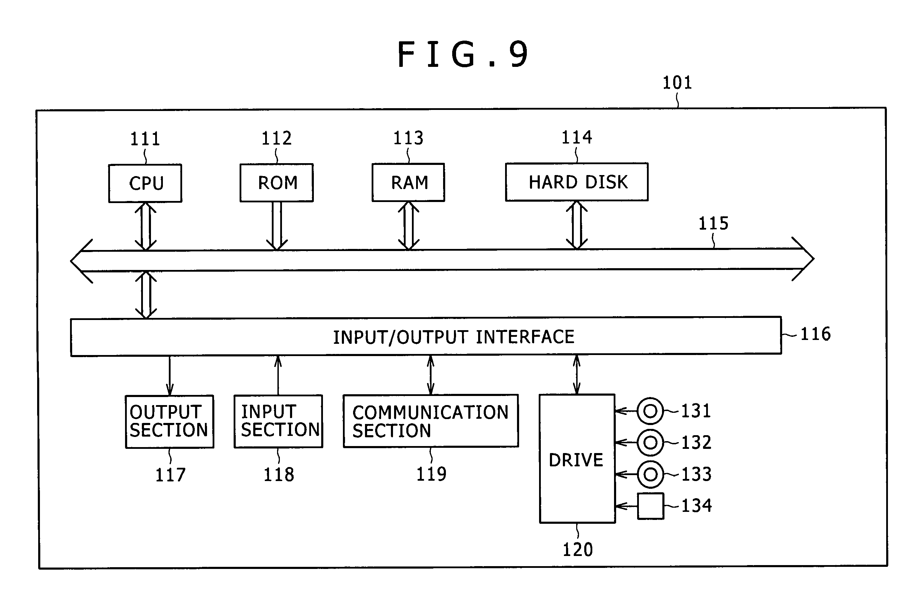

The above-described series of processes such as the clustering process may be implemented either by dedicated hardware or by software. In the case where the series of processes is implemented by software, the series of processes is, for example, realized by causing a (personal) computer as illustrated in FIG. 9 to execute a program.

In FIG. 9, a CPU (Central Processing Unit) 111 performs various processes in accordance with a program stored in a ROM (Read Only Memory) 112 or a program loaded from a hard disk 114 into a RAM (Random Access Memory) 113. In the RAM 113, data necessary for the CPU 111 to perform the various processes and the like are also stored as appropriate.

The CPU 111, the ROM 112, and the RAM 113 are connected to one another via a bus 115. An input/output interface 116 is also connected to the bus 115.

To the input/output interface 116: an input section 118 formed by a keyboard, a mouse, an input terminal, and the like; an output section 117 formed by a display such as a CRT (Cathode Ray Tube) or an LCD (Liquid Crystal Display), an output terminal, a loudspeaker, and the like; and a communication section 119 formed by a terminal adapter, an ADSL (Asymmetric Digital Subscriber Line) modem, a LAN (Local Area Network) card, or the like; are connected.

The communication section 119 performs a communication process via various networks such as the Internet.

A drive 120 is also connected to the input/output interface 116, and a removable medium (storage medium) 134, such as a magnetic disk (including a floppy disk) 131, an optical disk (including a CD-ROM (Compact Disk-Read Only Memory) and a DVD (Digital Versatile Disk)) 132, a magneto-optical disk (including an MD (Mini-Disk)) 133, or a semiconductor memory, is mounted on the drive 120 as appropriate, so that a computer program read therefrom is installed into the hard disk 114 as necessary.

Note that the steps described in the flowchart in the present specification may naturally be performed chronologically in order of description but need not be performed chronologically. Some steps may be performed in parallel or independently of one another.

Also note that the term "system" as used in the present specification refers to the whole of a device composed of a plurality of devices.

**Claims**

1. An information processing apparatus, comprising:

    first selection means for sequentially selecting, as a focused item, items that are to be clustered;
    second selection means for selecting, as a target item, an item that is close to the focused item out of the items that are to be clustered;
    calculation means for calculating a distance from the focused item to the target item and a distance from the target item to the focused item, using an asymmetric distance measure based on generality of the focused item and the target item; and
    linking means for linking the focused item and the target item together based on the distances calculated by said calculation means.

2. The information processing apparatus according to claim 1, wherein, based on the distances calculated by said calculation means, said linking means links the focused item and the target item together by a parent-child relationship with one of the focused item and the target item as a parent and the other as a child.

3. The information processing apparatus according to claim 1, wherein said second selection means selects one item that is closest to the focused item as the target item.

4. The information processing apparatus according to claim 1, wherein said second selection means selects a predetermined number of items that are close to the focused item as the target items.

5. The information processing apparatus according to claim 1, wherein said linking means links the focused item and the target item together by a parent-child relationship while permitting the focused item to have a plurality of parents.

6. The information processing apparatus according to claim 1, wherein a root node of a cluster obtained as a result of the linking performed by said linking means with respect to all the items that are to be clustered is determined to be a representative item of the cluster.

7. An information processing method, comprising:

    a first selection step of sequentially selecting, as a focused item, items that are to be clustered;
    a second selection step of selecting, as a target item, an item that is close to the focused item out of the items that are to be clustered;
    a calculation step of calculating a distance from the focused item to the target item and a distance from the target item to the focused item, using an asymmetric distance measure based on generality of the focused item and the target item; and
    a linking step of linking the focused item and the target item together based on the distances calculated in said calculation step.

8. A program storage medium having stored therein a program to be executed by a processor that performs a clustering process, the program comprising:

    a first selection step of sequentially selecting, as a focused item, items that are to be clustered;

a second selection step of selecting, as a target item, an item that is close to the focused item out of the items that are to be clustered;

a calculation step of calculating a distance from the focused item to the target item and a distance from the target item to the focused item, using an asymmetric distance measure based on generality of the focused item and the target item; and

a linking step of linking the focused item and the target item together based on the distances calculated in said calculation step.

# FIG.1

EP 1 868 117 A1

FIG. 2

# FIG.3

| LATENT VARIABLE | WARM | GENTLE | WARMTH | WILD | HARSH | GUTSY | ROUGH |
|---|---|---|---|---|---|---|---|
| z0 | 0.1 | 0.15 | 0.1 | 0.65 | 0.75 | 0.75 | 0.85 |
| z1 | 0.1 | 0.05 | 0.15 | 0.15 | 0.1 | 0.05 | 0.05 |
| z2 | 0.7 | 0.65 | 0.7 | 0.1 | 0.1 | 0.15 | 0.05 |
| z3 | 0.1 | 0.15 | 0.05 | 0.1 | 0.05 | 0.05 | 0.05 |

EP 1 868 117 A1

# FIG.4

START

SELECT ITEM $w_i$ — S1

SELECT ITEM $w_j$ THAT IS CLOSEST TO $w_i$ — S2

$w_j$ IS ALREADY PARENT OR CHILD OF $w_i$? — S3

YES → (loop back)

NO

$D(w_i \| w_j) > D(w_j \| w_i)$? — S4

NO → (to S9)

YES

$w_j$ ALREADY HAS PARENT? — S5

YES

NO → (to S8)

$D(w_j \| w_i) < D(w_j \| w_k)$? — S6

NO → (to S8 path)

YES

DISSOLVE RELATIONSHIP BETWEEN $w_j$ AND $w_k$ — S7

DETERMINE $w_i$ TO BE PARENT OF $w_j$ — S8

DETERMINE $w_i$ TO BE CHILD OF $w_j$ — S9

ALL ITEMS HAVE BEEN SELECTED? — S10

NO → (loop back)

YES

EXTRACT REPRESENTATIVE ITEM — S11

END

# F I G . 5

| KL($\downarrow$ || $\rightarrow$) | WARM | GENTLE | WARMTH | WILD | HARSH | GUTSY | ROUGH |
|---|---|---|---|---|---|---|---|
| WARM | 0 | 0.0174 | 0.0125 | 0.4927 | 0.5342 | 0.4410 | 0.7696 |
| GENTLE | 0.0169 | 0 | 0.0532 | 0.4354 | 0.4801 | 0.3807 | 0.6826 |
| WARMTH | 0.0114 | 0.0526 | 0 | 0.4952 | 0.5305 | 0.4524 | 0.7809 |
| WILD | 0.4703 | 0.3866 | 0.4740 | 0 | 0.0161 | 0.0437 | 0.0560 |
| HARSH | 0.5567 | 0.4492 | 0.5542 | 0.0140 | 0 | 0.0125 | 0.0194 |
| GUTSY | 0.5258 | 0.4048 | 0.5321 | 0.0341 | 0.0114 | 0 | 0.0308 |
| ROUGH | 0.7026 | 0.5608 | 0.7088 | 0.0451 | 0.0161 | 0.0223 | 0 |

EP 1 868 117 A1

# FIG.6

A

B

# FIG.7

A

B

EP 1 868 117 A1

FIG.8

WILD — HARSH ← ROUGH
HARSH ← GUTSY

WARM ← WARMTH
WARM ← GENTLE

18

# FIG.9

EP 1 868 117 A1

## INTERNATIONAL SEARCH REPORT

| | International application No. |
|---|---|
| | PCT/JP2006/306485 |

**A. CLASSIFICATION OF SUBJECT MATTER**
*G06F17/30*(2006.01)

According to International Patent Classification (IPC) or to both national classification and IPC

**B. FIELDS SEARCHED**

Minimum documentation searched (classification system followed by classification symbols)
G06F17/30

Documentation searched other than minimum documentation to the extent that such documents are included in the fields searched
Jitsuyo Shinan Koho        1922-1996   Jitsuyo Shinan Toroku Koho    1996-2006
Kokai Jitsuyo Shinan Koho   1971-2006   Toroku Jitsuyo Shinan Koho    1994-2006

Electronic data base consulted during the international search (name of data base and, where practicable, search terms used)
JSTPlus(JDream2)

**C. DOCUMENTS CONSIDERED TO BE RELEVANT**

| Category* | Citation of document, with indication, where appropriate, of the relevant passages | Relevant to claim No. |
|---|---|---|
| X | JP 2004-5337 A  (Nippon Telegraph And Telephone Corp.),<br>08 January, 2004 (08.01.04),<br>Full text; all drawings<br>(Family: none) | 1-8 |
| A | Noriaki KAWAMAE et al., "Tango no Imi Kankei o Chushutsu suru Tokei Model Sentaku ni tsuite no Kosatsu-Bayes Tokei ni Motozuku Tango no Imi Kankei Chushutsu-", Information Processing Society of Japan Kenkyu Hokoku, Vol.2003, No.108, 07 November, 2003 (07.11.03), pages 155 to 160 | 1-8 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 April, 2006 (27.04.06) | 16 May, 2006 (16.05.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/306485

C (Continuation).   DOCUMENTS CONSIDERED TO BE RELEVANT

| Category* | Citation of document, with indication, where appropriate, of the relevant passages | Relevant to claim No. |
|---|---|---|
| A | Yoshiharu SATO et al., Asymmetric Proximity Functions and their Applications, Proceedings of the 1997 International Conference on Neural Information Processing and Intelligent Information Systems, Vol.1, 1998, pages 539 to 542 | 1-8 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MACQUEEN, J.** Some Methods for Classification and Analysis of Multivariate Observations. *Proc. of the 5th Berkeley Symposium on Mathematical Statistics and Probability,* 1967, 281-297
- **ZHANG, B et al.** *K-Harmonic Means - a Data Clustering Algorithm,* 1999
- **HOFMANN, T.** Probabilistic Latent Semantic Analysis. *Proc. of Uncertainty in Artificial Intelligence,* 1999
- **DAICHI MOCHIHASHI ; YUJI MATSUMOTO.** *Imi no Kakuritsuteki Hyogen (Probabilistic Representation of Meanings,* 2002, 77-84
- **NAGAO ; JOHO SHORI et al.** *Nihongo Bunken ni okeru Juyogo no Jidou Chushutsu (An Automatic Method of the Extraction of Important Words from Japanese Scientific Documents,* 1976, vol. 17 (2